# EUROPÄISCHE PATENTSCHRIFT

(11) **EP 2 089 667 B1**
(45) Veröffentlichungstag und Bekanntmachung des Hinweises auf die Patenterteilung: **14.07.2010**
(21) Anmeldenummer: 07819781.1
(22) Anmeldetag: 13.11.2007
(51) Int. Cl.: G01B 5/008, G01B 21/04

(54) **VERFAHREN UND VORRICHTUNG ZUM BESTIMMEN VON RAUMKOORDINATEN AN EINER VIELZAHL VON MESSPUNKTEN**
METHOD AND APPARATUS FOR DETERMINING SPATIAL COORDINATES AT A MULTIPLICITY OF MEASUREMENT POINTS
PROCÉDÉ ET DISPOSITIF DE DÉTERMINATION DES COORDONNÉES SPATIALES DE PLUSIEURS POINTS DE MESURE

(30) Priorität: 17.11.2006 DE 102006055005
(43) Veröffentlichungstag der Anmeldung: 19.08.2009
(73) Patentinhaber: Carl Zeiss Industrielle Messtechnik GmbH, 73447 Oberkochen (DE)
(72) Erfinder: RUCK, Otto, 73479 Ellwangen-Pfahlheim (DE); AUBELE, Eugen, 89558 Böhmenkirch (DE); GRUPP, Guenter, 89558 Boehmenkirch (DE)
(74) Vertreter: Witte, Weller & Partner
(86) Internationale Anmeldenummer: PCT/EP2007/009797
(87) Internationale Veröffentlichungsnummer: WO 2008/058701

(56) Entgegenhaltungen:
- EP-A- 0 849 654
- EP-A- 1 503 174
- DE-A1- 3 106 031
- DE-A1- 4 424 225

## Beschreibung

Die Erfindung betrifft ein Verfahren und eine Vorrichtung zum Bestimmen von Raumkoordinaten an einer Vielzahl von Messpunkten entlang einer Kontur eines Messobjekts. Insbesondere betrifft die Erfindung ein Verfahren und eine Vorrichtung zum kontinuierlichen Vermessen (sogenanntes Scannen) einer Oberfläche eines Messobjekts mit Hilfe eines aktiven taktilen Tastkopfes, der die Einstellung einer definierten Antast- bzw. Messkraft ermöglicht.

Die vorliegende Erfindung findet Anwendung auf dem Gebiet der sogenannten Koordinatenmesstechnik. Hierunter versteht man das ein-, zwei- und bevorzugt sogar dreidimeilsionale Vermessen von Werkstücken mit Hilfe von Messwerkzeugen, welche die Bestimmung von Raumkoordinaten an ausgewählten Messpunkten der Werkstücke ermöglichen. Ein typisches Koordinatenmessgerät besitzt ein Kopfteil, das relativ zu dem Werkstück bzw. Messobjekt verfahren werden kann. Das Kopfteil trägt einen Sensor, mit dessen Hilfe das Kopfteil in eine exakt definierte Position in Bezug zu dem Messpunkt gebracht werden kann. Bei taktilen Koordinatenmessgeräten wird der Messpunkt mit Hilfe eines Tastelements angetastet. Das Kopfteil wird daher in solchen Fällen üblicherweise als Tastkopf bezeichnet. Das Tastelement ist in der Regel ein Taststift, dessen freies Ende in einer kugelförmigen Spitze ausläuft. Der Taststift ist an dem Tastkopf beweglich gelagert, so dass der Taststift beim Antasten relativ zu dem Tastkopf ausgelenkt wird. Bei einer bestimmten Auslenkung und/oder Antastkraft werden Positionsmesswerte eingelesen, die für die Position des Tastkopfes im Messvolumen und damit für die Position des Tastkopfes relativ zu den Messobjekt repräsentativ sind. Bei sogenannten messenden Tastköpfen wird außerdem die Auslenkung des Taststiftes relativ zum Tastkopf bestimmt. Aus den Positionsmesswerten für den Tastkopf und den Auslenkungen des Taststiftes lassen sich dann Raumkoordinaten für den angetasteten Messpunkt bestimmen. Durch Antasten mehrerer Oberflächenpunkte an einem Werkstück können auch geometrische Abmessungen und Formverläufe erfasst werden, wobei Letzteres besonders gut mit einer kontinuierlichen (scannenden) Messwertaufnahme möglich ist.

Bei Tastköpfen für taktile Koordinatenmessgeräte muss man zwischen aktiven und passiven Tastköpfen unterscheiden. Bei passiven Tastköpfen wird die Ruhelage des Tastelements allein mit Hilfe von mechanischen Federn eingestellt. Ein Auslenken aus der Ruhelage erfolgt nur beim Antasten eines Messpunktes gegen die Federkraft. Aktive Tastköpfe besitzen demgegenüber einen oder mehrere Aktoren, mit denen das Tastelement in definierter Weise ausgelenkt werden kann, bevor bzw. ohne dass eine Antastung stattfindet. Solche aktiven Tastköpfe eignen sich besonders für scannende Messungen, weil der Aktor dazu verwendet werden kann, das Tastelement in stetigem Kontakt mit der Oberfläche des Messobjekts zu halten.

Ein Beispiel für ein Koordinatenmessgerät mit einem aktiven Tastkopf, der die Einstellung einer definierten Vorauslenkung ermöglicht, ist in DE 102 29 824 A1 offenbart.

Dokumente EP 0 849 654, EP 1 503 174, DE 44 24 225 und DE 31 06 031 beschreiben Koordinatenmessungen, bei denen Tastköpfe für Koordinatenmessgeräte während der Messung mit einer definierten Antastkraft gegen ein Werkstück gedrückt werden. In der EP'654 wird die relative Auslenkung des Tastelements zum Tastkopf gemessen, daraus die relative Beschleunigung gemessen und abhängig davon eine Korrektur bestimmt, etwa für durch die Massenträgheit hervorgerufene Fehler. In der EP'174 werden Korrekturen aus einem absoluten, mit einem Beschleunigungssensor gemessenen Beschleunigungssignal bestimmt. In der DE'225 und der DE'031 wird jeweils die relative Auslenkung des Tastelements zum Tastkopf gemessen, daraus die relative Geschwindigkeit berechnet und daraus wiederum ein Korrektursignal zur Schwingungsdämpfung bestimmt.

Die Erfindung ist allerdings nicht auf Koordinatenmessgeräte im engeren Sinne beschränkt. Sie kann bspw. auch bei Werkzeugmaschinen oder bei anderen Maschinen eingesetzt werden, bei denen eine Werkstückoberfläche mit einem taktilen Tastelement abgetastet wird.

Auch bei aktiven Tastköpfen ist das Tastelement mit Hilfe von Federelementen an dem Tastkopf gelagert, um eine Auslenkung um die Ruhelage zu ermöglichen. Die Lagerung mit Federelementen hat sowohl bei aktiven als auch bei passiven Tastköpfen zur Folge, dass das Tastelement aufgrund der Bewegungen des Tastkopfes und aufgrund der Antastungen in mechanische Schwingungen geraten kann. Bei passiven Tastköpfen versucht man üblicherweise, solche Schwingungen mit Hilfe von fluidischen Dämpfungssystemen zu unterdrücken.

Aktive Tastköpfe ermöglichen darüber hinaus eine elektronische Schwingungsunterdrückung mit Hilfe der Messkraftaktoren im Tastkopf. Die Anmelderin der vorliegenden Erfindung hat schon verschiedene Versuche unternommen, eine solche elektronische Unterdrückung zu realisieren. In einem Fall wurde versucht, das Verhalten eines fluidischen Dämpfungssystems elektronisch nachzubilden, indem ein von der Auslenkungsgeschwindigkeit des Tastelements abhängiges Signal als Korrekturgröße in einem Regelkreis verwendet wurde, der zum Einstellen der Antastkraft des Tast-elements dient. Je höher die Auslenkungsgeschwindigkeit des Tastelements war, desto stärker wurde die Auslenkung des Tastelements bedämpft.

Es hat sich allerdings gezeigt, dass diese Vorgehensweise nicht in allen Fällen zufriedenstellende Ergebnisse liefert, und zwar insbesondere beim taktilen Scannen einer horizontalen Kontur an einem Messobjekt.

Vor diesem Hintergrund ist es eine Aufgabe der vorliegenden Erfindung, ein Verfahren und eine Vorrichtung der eingangs genannten Art anzugeben, die eine wirkungsvolle Unterdrückung von Schwingungen des Tastelements insbesondere beim Scannen einer Werkstückoberfläche ermöglichen. Es versteht sich dabei, dass der Begriff "Unterdrückung" nicht notwendigerweise eine vollständige Eliminierung derartiger Schwingungen bezeichnet, sondern dass bereits eine erkennbare Reduzierung derartiger Schwingungen unter wechselnden Betriebsbedingungen ein gutes Ergebnis darstellt.

Gemäß einem ersten Aspekt der vorliegenden Erfindung wird zur Lösung dieser Aufgabe ein Verfahren der eingangs genannten Art mit folgenden Schritten vorgeschlagen:
- Bereitstellen eines Tastkopfes mit einem Tastelement, das an dem Tastkopf beweglich gelagert ist, wobei der Tastkopf relativ zu dem Messobjekt in einem Messvolumen verfahren wird,
- Antasten eines ersten Messpunktes an der Kontur mit dem Tastelement und Aufnehmen von ersten Positionsmesswerten und ersten Auslenkungen, wobei die ersten Positionsmesswerte für die Position des Tastkopfes in dem Messvolumen repräsentativ sind, und wobei die ersten Auslenkungen für die Position des Tastelements relativ zum Tastkopf repräsentativ sind,
   Verfahren des Tastkopfes entlang der Kontur und Aufnehmen von weiteren
   Positionsmesswerten und weiteren Auslenkungen, und
- Bestimmen der Raumkoordinaten in Abhängigkeit von den Positionsmesswerten und den Auslenkungen,
   wobei das Tastelement beim Verfahren des Tastkopfes in Kontakt mit der Kontur gehalten wird, indem mit Hilfe eines Aktors zum Einstellen einer definierten Vorauslenkung des Tastelements eine definierte Antastkraft erzeugt wird, und
   wobei die definierte Antastkraft in Abhängigkeit von einer Differenzbeschleunigung des Tastelements relativ zu dem Tastkopf und ferner in Abhängigkeit von einer Geschwindigkeit desTastelements relativ zudem Tastkopf und ferner in Abhängigkeit von einer Geschwindigkeit des Tastelements relativ zu dem Tastkopf bestimmt wird.

Gemäß einem weiteren Aspekt der Erfindung wird eine Vorrichtung der eingangs genannten Art vorgeschlagen, mit einem Tastkopf mit einem Tastelement, das an dem Tastkopf beweglich gelagert ist, wobei der Tastkopf relativ zu dem Messobjekt in einem Messvolumen verfahrbar ist, und wobei der Tastkopf zumindest einen Aktor zum Einstellen einer Vorauslenkung des Tastelements relativ zu einer Tastkopfbasis besitzt, mit ersten Positionsmesseinrichtungen zum Bestimmen von Positionsmesswerten, die für die Position des Tastkopfes in dem Messvolumen repräsentativ sind, mit zweiten Positionsmesseinrichtungen zum Bestimmen von Auslenkungen, die für die Position des Tastelements relativ zum Tastkopf repräsentativ sind, mit einer Auswerte- und Steuereinheit zum Bestimmen der Raumkoordinaten in Abhängigkeit von den Positionsmesswerten und den Auslenkungen, und mit einer Regeleinrichtung, die dazu ausgebildet ist, das Tastelement beim Verfahren des Tastkopfes in Kontakt mit der Kontur zu halten, indem mit Hilfe des Aktors eine definierte Antastkraft erzeugt wird, wobei die Regeleinrichtung dazu ausgebildet ist, die definierte Antastkraft in Abhängigkeit von einer Differenzbeschleunigung des Tastelements relativ zu dem Tastkopf und ferner in Abhängigkeit von einer Geschwindigkeit des Tastelements relativ zu dem Tastkopf zu bestimmen.

In bevorzugten Ausführungen wird die Erfindung mit Hilfe eines Computerprogrammproduktes realisiert, d.h. mit einer Software, die dazu ausgebildet ist, ein solches Verfahren auszuführen, wenn der Programmcode in der Auswerte- und Steuereinheit einer solchen Vorrichtung ausgeführt wird. Eine solche Software ermöglicht es insbesondere, das neue Verfahren bei älteren Koordinatenmessgeräten und entsprechenden Maschinen nachzurüsten.

Das neue Verfahren und die neue Vorrichtung beruhen auf der Idee, eine Beschleunigung des Tastelements relativ zu dem Tastkopf zu verwenden, um ein zu den potentiellen Schwingungen des Tastelements gegenphasiges Signal zu erhalten, das zum Ausregeln der Schwingungen verwendet werden kann. Bei der Beschleunigung des Tastelements relativ zu dem Tastkopf handelt es sich um eine Differenzbeschleunigung, da die Beschleunigungen des Tastkopfes selbst für eine wirksame Bedämpfung der störenden Schwingungen weniger geeignet ist. Dagegen lassen sich mit Hilfe der Differenzbeschleunigung des Tastelements relativ zu dem Tastkopf sehr gute Ergebnisse erreichen, weil die zu unterdrückenden Schwingungen einen etwa sinusförmigen Positionsverlauf des Tastelements relativ zu dem Tastkopf zur Folge haben. Da die Beschleunigung einer zweifachen Differenzierung dieses Positionsverlaufs entspricht, ist der Verlauf der Differenzbeschleunigung ebenfalls sinusförmig, allerdings um 180° phasenverschoben. Die (Differenz-)Beschleunigung des Tastelements relativ zu dem Tastkopf liefert somit ein Signal, das hervorragend geeignet ist, um als gegenphasiges Korrektursignal zu dienen, mit dessen Hilfe die Schwingungen des Tastelements ausgeregelt werden können, indem die definierte Antastkraft des Tastelements in Abhängigkeit von der Beschleunigung und ferner von der Geschwindigkeit des Tastelements relativ zu dem Tastkopf bestimmt wird.

Das neue Verfahren und die neue Vorrichtung lassen sich bei Systemen, die aktive, messende Tastköpfe mit einer einstellbaren, definierten Vorauslenkung verwenden, sehr einfach und kostengünstig realisieren. Im Idealfall sind keine Umbaumaßnahmen an der Hardware erforderlich.

Darüber hinaus hat sich in praktischen Versuchen gezeigt, dass die unerwünschten Schwingungen des Tastelements mit der neuen Vorgehensweise sehr wirkungsvoll unterdrückt werden können Besonders vorteilhaft ist dies bei Messungen, bei denen die Kontur eines Messobjekts kontinuierlich vermessen bzw. gescannt wird. Aufgrund der reduzierten Schwingungen lässt sich eine höhere Messgenauigkeit erreichen.

Die oben genannte Aufgabe ist daher vollständig gelöst.

In einer Ausgestaltung der Erfindung trägt zur Messung des Beschleunigung des Tastelements zumindest ein Beschleunigungssensor bei. Vorzugsweise werden zumindest zwei Beschleunigungssensoren verwendet, von denen einer mit dem beweglichen Tastelement gekoppelt ist, während ein anderer mit einer (relativ dazu) feststehenden Tastkopfbasis gekoppelt ist.

Die messtechnische Erfassung der Differenzbeschleunigung erleichtert eine wirkungsvolle Unterdrückung der unerwünschten Schwingungen in Fällen, in denen die Rechenleistung der Auswerte- und Steuereinheit begrenzt ist, so dass eine Echtzeit-Unterdrückung schwierig zu realisieren ist. Die Verwendung von zwei getrennten Beschleunigungssensoren an bzw. in Verbindung mit dem Tastelement und der Tastkopfbasis ermöglicht eine besonders einfache und schnelle Erfassung der Differenzbeschleunigung.

In einer weiteren Ausgestaltung der Erfindung wird die Beschleunigung des Tastelements mit zumindest einem Zustandsbeobachter geschätzt.

Ein Zustandsbeobachter beinhaltet eine Simulation anhand eines mathematischen Modells, welches das Verhalten des Tastelements relativ zu dem Tastkopf beschreibt. Der Zustandsbeobachter kann mit Hilfe von Software und/oder mit Hilfe von Hardware realisiert sein. Er erhält die gleichen Eingangsgrößen, die auch zur Steuerung des Tastelements und insbesondere zum Einstellen der Antastkraft verwendet werden. Außerdem erhält der Zustandsbeobachter die Ausgangsgrößen, mit denen die IstPosition des Tastelements erfasst wird. Damit kann der Zustandsbeobachter das Verhalten des Tastelements nachbilden und aus dem Modell lassen sich dann weitere Zustandsgrößen, wie insbesondere die Beschleunigung des Tastelements, schätzen. Die Verwendung eines Zustandsbeobachters ermöglicht die Bestimmung der (Differenz-)Beschleunigung des Tastelements, ohne dass entsprechende Beschleunigungssensoren benötigt werden. Dies ist von Vorteil, weil kommerzielle Beschleunigungssensoren, wie sie bspw. für die Auslösung von Airbags in Kraftfahrzeugen verwendet werden, nur bei relativ starken Beschleunigungen ansprechen. Die im vorliegenden Fall auftretenden Beschleunigungen des Tastelements sind jedoch relativ gering, was eine messtechnische Erfassung schwierig macht. Die Verwendung eines Zustandsbeobachters vermeidet diese Schwierigkeiten. Allerdings besitzt die Verwendung eines Zustandsbeobachters den Nachteil, dass äußere Störgrößen, wie etwa starke Schwingungen des Untergrundes, auf dem das Koordinatenmessgerät steht, nicht oder nur sehr schwer in Echtzeit erfasst werden können. Aus diesem Grund kann eine Kombination von Beschleunigungssensoren und einem Zustandsbeobachter von Vorteil sein.

In einer weiteren Ausgestaltung der Erfindung wird die Beschleunigung des Tastelements differentiell aus den Auslenkungen des Tastelements relativ zum Tastkopf bestimmt.

Diese Ausgestaltung ist aus heutiger Sicht besonders bevorzugt, weil aktive messende Tastköpfe üblicherweise schon eine oder mehrere Positionsmesseinrichtungen aufweisen, die die Bestimmung der Auslenkungen des Tastelements relativ zum Tastkopf ermöglichen. Somit steht der für diese Ausgestaltung benötigte "Startwert" ohnehin zur Verfügung. Eine zweifache Differenzierung liefert die Differenzbeschleunigung des Tastelements relativ zu dem Tastkopf unter Berücksichtigung von etwaigen externen Störgrößen. Darüber hinaus kann diese Ausgestaltung für eine Vielzahl verschiedener Tastköpfe und Taststiftkombinationen verwendet werden, weil die Ausgestaltung unabhängig von den Parametern des Tastkopfes ist. Dies ist besonders vorteilhaft, weil die Tastköpfe von Koordinatenmessgeräten häufig mit wechselnden Taststiftanordnungen bestückt werden, so dass sich das Verhalten des Tastelements abhängig von der jeweiligen Bestückung verändert.

Weiterhin wird die definierte Antastkraft auch in Abhängigkeit von einer Geschwindigkeit des Tastelements relativ zu dem Tastkopf bestimmt.

Es hat sich gezeigt, dass diese Ausgestaltung in Kombination mit der beschleunigungsabhängigen Dämpfung besonders gute Ergebnisse liefert. Dies gilt vor allem dann, wenn die Beschleunigung des Tastelements durch zweifache Differenzierung aus den Auslenkungen des Tastelements bestimmt wird, weil die Geschwindigkeit des Tastelements dann als Zwischenergebnis ohnehin zur Verfügung steht. Außerdem kann das durch zweifache Differenzierung gewonnene Beschleunigungssignal starke Störanteile aufgrund von Rauschen enthalten. Eine geschwindigkeitsabhängige Dämpfung ermöglicht eine effiziente Unterdrückung der unerwünschten Schwingungen vor allem in den Fällen, in denen starke Störungen im Beschleunigungssignal vorhanden sind.

In einer weiteren Ausgestaltung wird die definierte Antastkraft taktweise in Abhängigkeit von der Beschleunigung und auch von der Geschwindigkeit des Tastelements bestimmt.

Diese Ausgestaltung ist vorteilhaft, weil sie eine kostengünstige digitale Realisierung per Software erleichtert und einfach in vorhandene Regelalgorithmen integriert werden kann.

In einer weiteren Ausgestaltung wird die Beschleunigung des Tastelements gefiltert, um eine gefilterte Beschleunigung zu erhalten, wobei die definierte Antastkraft in Abhängigkeit von der gefilterten Beschleunigung des Tastelements bestimmt wird.

Diese Ausgestaltung ist vorteilhaft, weil sich vorhandene Störsignale in dem Beschleunigungssignal besonders stark auswirken, wodurch die Unterdrückung der unerwünschten Schwingungen beeinträchtigt wird. In realen Betriebsumgebungen ist eine wirkungsvolle Filterung des Beschleunigungssignals von großer Bedeutung für die wirkungsvolle Unterdrückung der unerwünschten Schwingungen.

In einer Weiteren Ausgestaltung wird die Beschleunigung des Tastelements mit Hilfe eines nicht-rekursiven Filters gefiltert, um die gefilterte Beschleunigung zu erhalten.

Nicht rekursive Filter werden häufig auch als FIR-(finite impulse response) Filter bezeichnet. Es handelt sich um üblicherweise digitale Filter, bei denen ein oder mehrere Vergangenheitswerte eines Signals (hier des Beschleunigungssignals) mit einer Gewichtung versehen und zum aktuellen Wert des Beschleunigungssignals addiert werden. Man erhält auf diese Weise eine Art von Mittelwertbildung aus dem aktuellen und den vergangenen Signalwerten, die sich zur Unterdrückung der unerwünschten Schwingungen als besonders wirkungsvoll erwiesen hat.

In einer weiteren Ausgestaltung weist das nicht-rekursive Filter eine weitgehend rechteckige Gewichtung auf.

In dieser Ausgestaltung wird zum jeweils aktuellen Beschleunigungswert eine Anzahl von Vergangenheitswerten addiert, wobei alle addierten Beschleunigungswerte weitgehend gleichgewichtet sind. Auf diese Weise wird ein gleitender Mittelwert gebildet. Diese Ausgestaltung liefert gute Ergebnisse und besitzt den Vorteil, dass sie mit geringem Rechenaufwand realisiert werden kann. Besonders vorteilhaft ist, dass man ein solches FIR-Filter realisieren kann, ohne dass die erforderliche Rechenleistung von der Filterbreite bzw. der Anzahl der Vergangenheitswerte abhängt. Außerdem verursacht diese Art von FIR-Filter eine relativ geringe Phasenverschiebung, was für die Unterdrückung der unterwünschten Schwingungen von Vorteil ist.

In einer weiteren Ausgestaltung weist das nicht-rekursive Filter eine weitgehend dreieckige Gewichtung auf.

In dieser Ausgestaltung ist die Gewichtung zumindest annähernd antiproportional zu der Zeit. Je weiter ein Beschleunigungswert in der Vergangenheit liegt, desto weniger stark wird er gewichtet. Anders ausgedrückt werden die Beschleunigungswerte mit einem um so kleineren Faktor bewertet, je weiter sie relativ zu dem aktuellen Beschleunigungswert in der Vergangenheit liegen. Ein solches FIR-Filter hat eine sehr geringe Phasenverschiebung und eignet sich daher besonders gut zur Filterung des Beschleunigungssignals im Rahmen der vorliegenden Erfindung. Vorteilhafterweise kann ein solches FIR-Filter ebenfalls mit einem von der Filterbreite unabhängigen Algorithmus realisiert werden, indem man in jedem Filtertakt den aktuellen Beschleunigungswert mit seiner zugehörigen Gewichtung zu der vorhandenen gewichteten Summe der vergangenen Werte addiert und dann die Summe der einfach gewichteten Werte subtrahiert.

In einer weiteren Ausgestaltung wird die Beschleunigung des Tastelements außerdem mit einem rekursiven Hochpassfilter gefiltert, um die gefilterte Beschleunigung zu erhalten. Vorteilhafterweise liegt das rekursive Hochpassfilter seriell zu dem nicht-rekursiven Filter. Besonders bevorzugt ist das rekursive Hochpassfilter dem nicht-rekursiven Filter nachgeschaltet.

Rekursive Filter werden häufig auch als IIR-(infinite impulse response)Filter bezeichnet. Es handelt sich hier um digitale Filter, bei denen ein Ausgangswert des gefilterten Ausgangssignals rekursiv von dem aktuellen Wert des zu filternden Beschleunigungssignals subtrahiert wird. Ein rekursives Filter kann mit Hilfe von bekannten Methoden, wie etwa der sogenannten bilinearen Transformation, recht einfach dimensioniert werden. Die bevorzugte Kombination eines FIR-Filters und eines IIR-Hochpassfilters hat in praktischen Versuchen der Anmelderin die besten Resultate ergeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in-der Zeichnung dargestellt und werden in der nachfolgenden Beschreibung näher erläutert. Es zeigen:
- Fig. 1: eine vereinfachte Darstellung eines Koordinatenmessgerätes nach einem Ausführungsbeispiel der Erfindung,
- Fig. 2: eine vereinfachte Darstellung eines Tastkopfes aus dem Koordinaten- messgerät aus Fig. 1, Fig. 3 ein Blockschaltbild für ein erstes Ausführungsbeispiel einer Regelein- richtung, die in dem Koordinatenmessgerät aus Fig. 1 zum Einsatz kommt,
- Fig. 4: ein Blockschaltbild für ein zweites Ausführungsbeispiel einer Regelein- richtung für das Koordinatenmessgerät aus Fig. 1,
- Fig. 5: ein Blockschaltbild für ein drittes Ausführungsbeispiel einer Regelein- richtung für das Koordinatenmessgerät aus Fig. 1,
- Fig. 6: eine Messkurve, welche die Auslenkungen des Taststiftes bei dem Koordinatenmessgerät aus Fig. 1 beim Scannen einer horizontalen Kon- tur zeigt, wobei das neue Verfahren nicht zum Einsatz kommt, und
- Fig. 7: eine Messkurve ähnlich derjenigen aus Fig. 6, jedoch unter Anwendung des neuen Verfahrens.

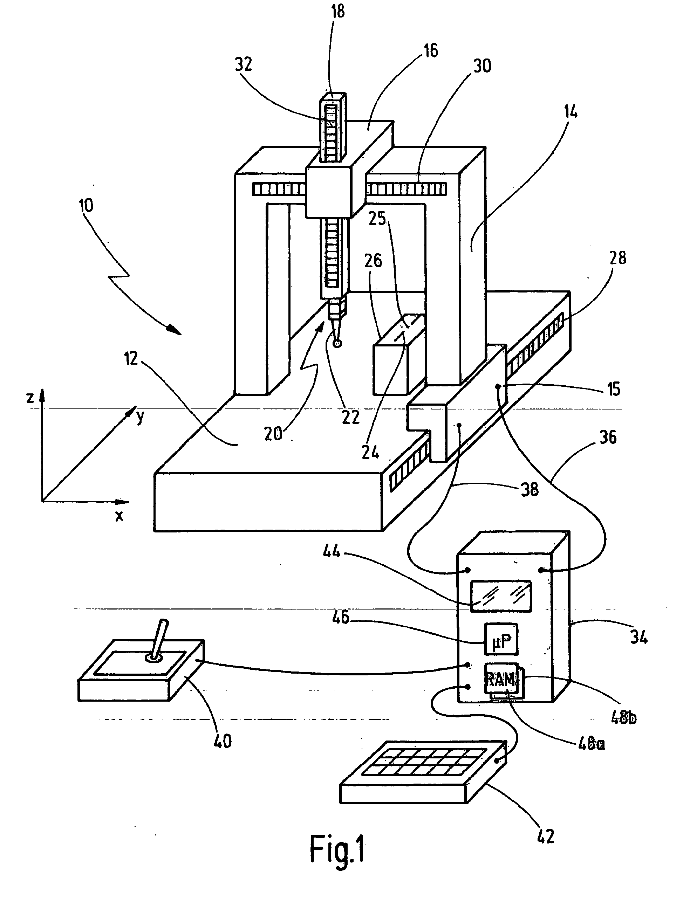

In Fig. 1 ist ein Koordinatenmessgerät als ein bevorzugtes Ausführungsbeispiel für eine erfindungsgemäße Vorrichtung in einer Gesamtheit mit der Bezugsziffer 10 bezeichnet. Das Koordinatenmessgerät 10 ist hier beispielhaft in Portalbauweise dargestellt. Die Erfindung ist allerdings nicht auf einem bestimmten Gestellaufbau beschränkt und sie kann bspw. auch bei Koordinatenmessgeräten in Horizontalarm-Bauweise und bei anderen Maschinen eingesetzt werden. Darüber hinaus kann die Erfindung auch bei Koordinatenmessgeräten und Maschinen eingesetzt werden, bei denen ein Werkstück relativ zu einem feststehenden Kopfteil verfahren wird, weil es im Rahmen der vorliegenden Erfindung allein auf die relative Bewegung zwischen dem Kopfteil und dem Werkstück ankommt.

Das Koordinatenmessgerät 10 besitzt eine Basis 12, auf der ein Portal 14 mit einem Antrieb 15 angeordnet ist. Das Portal 14 kann mit Hilfe des Antriebs 15 entlang einer Achsrichtung verfahren werden, die üblicherweise als y-Achse bezeichnet wird.

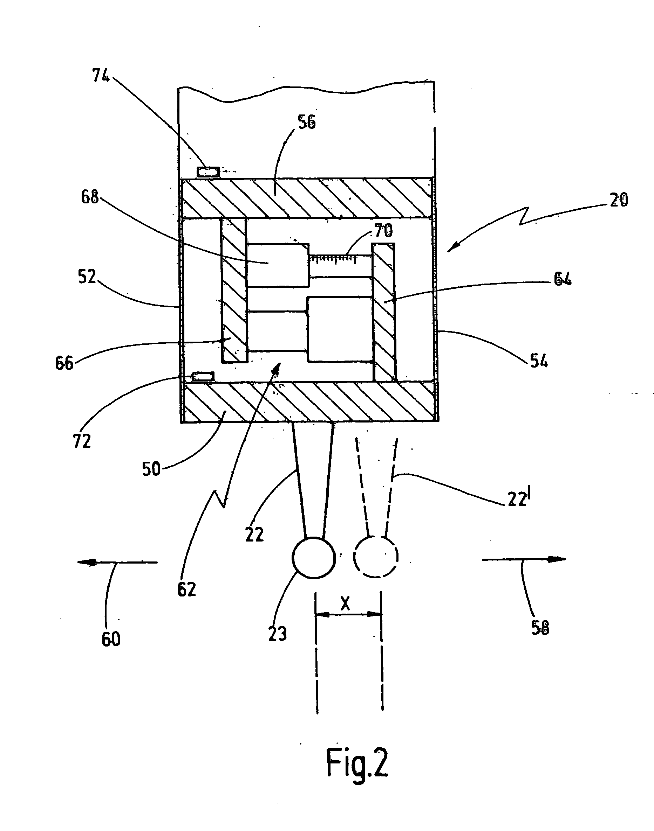

Am oberen Querträger des Portals 14 ist ein Schlitten angeordnet, der in x-Richtung verfahren werden kann. Der Schlitten 16 trägt eine Pinole 18, die in z-Richtung verfahren werden kann. Am unteren freien Ende der Pinole 18 befindet sich ein Tastkopf 20 mit einem Taststift 22. Der Taststift 22 besitzt an seinem freien Ende eine Tastkugel 23 (Fig. 2), die dazu dient, einen Oberflächenpunkt 24 an einem Werkstück 26 anzutasten. Zur Erläuterung der nachfolgenden Ausführungsbeispiele sei angenommen, dass der Oberflächenpunkt 24 ein Messpunkt innerhalb einer Kontur 25 ist, die an einer Oberfläche des Werkstücks bzw. Messobjekts 26 verläuft.

Mit den Bezugsziffern 28, 30, 32 sind Linearmaße bezeichnet, die parallel zu den Achsrichtungen des Koordinatenmessgerätes 10 angeordnet sind. Beispielsweise handelt es sich hier um Glasmaßstäbe, die mit Hilfe von geeigneten Sensoren (hier nicht dargestellt) abgelesen werden, um die Verfahrpositionen des Portals 14, des Schlittens 16 und der Pinole 18 zu bestimmen. Mit Hilfe dieser Messwerte lässt sich die Position des Tastkopfes 20 im Messvolumen des Koordinatenmessgerätes 10 bestimmen. Aus der Position des Tastkopfes kann dann die Raumkoordinate eines angetasteten Oberflächenpunktes 24 bestimmt werden.

Mit der Bezugsziffer 34 ist eine Auswerte- und Steuereinheit bezeichnet, die über Leitungen 36, 38 mit den Antrieben und Sensoren des Koordinatenmessgerätes 10 verbunden ist. Des Weiteren ist die Auswerte- und Steuereinheit 34 hier mit einem Steuerpult 40 und einer Tastatur 42 verbunden. Das Steuerpult 40 ermöglicht eine manuelle Steuerung des Koordinatenmessgerätes 10. Die Tastatur 42 ermöglicht die Eingabe von Betriebsparametern und die Auswahl von Messprogrammen etc.

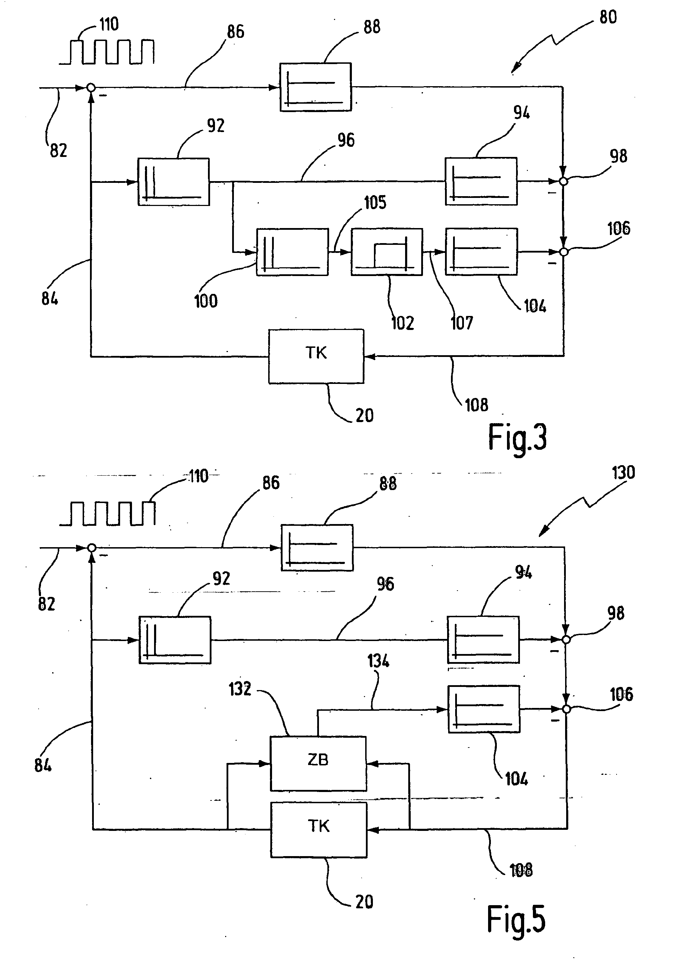

Die Steuereinheit 34 besitzt hier eine Anzeige 44, auf der Messergebnisse, Parameterwerte u.a. ausgegeben werden können. Außerdem besitzt sie einen Prozessor 46 und einen Speicher 48, der mit mehreren Speicherbereichen 48a, 48b dargestellt ist. Der Speicher 48 ist hier als RAM bezeichnet, kann jedoch auch ein ROM beinhalten, wobei das ROM vor allem zum Abspeichern der sog. Firmware des Koordinatenmessgerätes 10 dient. In bevorzugten Ausführungsbeispielen beinhaltet die Firmware Programmcode (hier nicht dargestellt), der unter anderem eine Regeleinrichtung realisiert, wie sie nachfolgend anhand der Figuren 3 bis 5 in verschiedenen Ausführungsbeispielen erläutert ist.

Fig. 2 zeigt den Tastkopf 20 des Koordinatenmessgerätes 10 mit weiteren Details, allerdings in einer stark vereinfachten Prinzipdarstellung.

Der Taststift 22 ist an einem beweglichen Teil 50 befestigt, das über zwei Blattfedern 52, 54 mit einer Tastkopfbasis 56 verbunden ist. Aufgrund der Blattfedern 52, 54 kann sich das bewegliche Teil 50 mit dem Taststift 22 relativ zu der Tastkopfbasis 56 bewegen, wobei die zwei zueinander entgegengesetzten Bewegungsrichtungen hier mit den Pfeilen 58, 60 angedeutet sind. Typischerweise liegen die Bewegungsrichtungen des Taststiftes 22 parallel zu den Bewegungsrichtungen x, y, z, in denen der Tastkopf 20 verfahren werden kann.

Die Fachleute auf diesem Gebiet werden erkennen, dass der in Fig. 2 dargestellte Tastkopf 20 eine Auslenkung des Taststiftes 22 in nur einer Achsrichtung 58, 60 ermöglicht, was auf die vereinfachte Darstellung zurückzuführen ist. Für eine Auslenkung des Taststiftes 22 in den zwei weiteren Achsrichtungen können weitere Blattfedern 52, 54 vorhanden sein, wie dies von den einschlägigen Tastköpfen der Anmelderin bekannt ist.

Mit der Bezugsziffer 62 ist ein Aktor bezeichnet, mit dessen Hilfe das Teil 50 relativ zu der Tastkopfbasis 56 ausgelenkt werden kann. Im dargestellten Ausführungsbeispiel ist der Aktor 62 beispielsweise eine Tauchspule, die zwischen zwei Schenkeln 64, 66 angeordnet ist. Der Schenkel 64 ist mit dem beweglichen Teil 50 verbunden, der Schenkel 66 ist mit der Tastkopfbasis 56 verbunden. Der Aktor 62 ist in der Lage, die Schenkel 64, 66 auseinander zu drücken oder zueinander zu ziehen, wodurch der Taststift 22 mit dem Teil 50 in die Raumrichtung 58 oder in die Raumrichtung 60 ausgelenkt wird. Eine solche, mit Hilfe des Aktors 62 erzeugte Auslenkung dient unter anderem zum Einstellen einer definierten Mess- bzw. Antastkraft. Außerdem wird der Aktor 62 im Rahmen der vorliegenden Erfindung dazu verwendet, Schwingungen des Taststiftes 22 relativ zu der feststehenden Tastkopfbasis 56 zu reduzieren, indem eine definierte Antastkraft in Abhängigkeit von einer momentanen Differenzbeschleunigung und, wie weiter unter beschrieben, einer Auslenkungsgeschwindig keit des Taststiftes 22 relativ zu der Tastkopfbasis 56 eingestellt wird.

Mit der Bezugsziffer 68 ist ein Sensor bezeichnet, der ebenfalls zwischen den beiden Schenkeln 64, 66 angeordnet ist. Der Sensor 68 ist hier mit einer Skala 70 dargestellt, die es ermöglicht, eine aktuelle Auslenkung X des Taststiftes 22 (dargestellt bei der Bezugsziffer 22') messtechnisch zu erfassen. Der Sensor 68 kann bspw. eine Tauchspule, ein Hall-Sensor, ein optischer Sensor oder ein anderer Positions- oder Längensensor sein.

Mit den Bezugsziffern 72 und 74 sind hier zwei Beschleunigungssensoren bezeichnet. Der Beschleunigungssensor 72 ist an dem beweglichen Teil 50 des Tastkopfes angeordnet, der mit dem Taststift 22 verbunden ist. Der Beschleunigungssensor 74 sitzt an der feststehenden Basis 56 des Tastkopfes 20. Mit Hilfe der beiden Beschleunigungssensoren 72, 74 ist es möglich, eine Differenzbeschleunigung des Taststiftes 22 relativ zu der Tastkopfbasis 56 zu bestimmen. Da diese Differenzbeschleunigung im Idealfall ein Signal darstellt, das zu den Schwingungen des Taststiftes 22 um seine Ruhelage herum gegenphasig ist, eignet sich die Differenzbeschleunigung als Korrektursignal zur Unterdrückung dieser Schwingungen. Bevorzugte Ausführungsbeispiele der Erfindung kommen allerdings ahne solche Beschleunigungssensoren 72, 74 aus, so dass die Beschleunigungssensoren 72, 74 hier optional zu sehen sind.

Fig. 3 zeigt ein erstes Ausführungsbeispiel für eine Regeleinrichtung 80, mit deren Hilfe eine definierte Antastkraft des Taststiftes 22 eingestellt wird. In bevorzugten Ausführungsbeispielen wird die definierte Antastkraft so eingestellt, dass die Tastkugel 23 des Taststiftes beim Verfahren des Tastkopfes 20 entlang der Kontur 25 in dauerndem Kontakt mit der Kontur 25 gehalten wird.

Die Regeleinrichtung 80 erhält als Eingangsgröße einen Sollwert 82 für die Auslenkung des Taststiftes 22. Von der Soll-Auslenkung 82 wird eine Ist-Auslenkung 84 des Taststiftes subtrahiert. Die Differenz ergibt die Regelabweichung 86. Beim Scannen einer Kontur 25 an einem Werkstück 26 wird die Soll-Auslenkung 82 des Taststiftes 22 vorteilhafterweise auf Null eingestellt. Die Ist-Auslenkung 84 kann bspw. anhand der Positionsmesseinrichtung 68 bestimmt werden. Die Regelabweichung 86 wird über ein P-Glied 88 verstärkt.

In dem bevorzugten Ausführungsbeispiel wird die Ist-Auslenkung 84 des Taststiftes 22 außerdem einem D-Glied 92, also einem Differentierer zugeführt. Das Ausgangssignal des D-Gliedes 92 ist die Auslenkungsgeschwindigkeit V_{IST} des Taststiftes 22. Sie ist hier mit der Bezugsziffer 96 bezeichnet. Die Auslenkungsgeschwindigkeit V_{IST} wird über ein weiteres P-Glied 94 verstärkt und an einem Summationspunkt 98 von der verstärkten Regelabweichung 86 subtrahiert. Dieser Zweig der Regeleinrichtung 80 bildet das Verhalten eines fluidischen Dämpfers nach, da die Vorauslenkung des Taststiftes 22 umso stärker bedämpft wird, je höher die Auslenkungsgeschwindigkeit V_{IST} ist. Praktische Versuche der Anmelderin haben allerdings gezeigt, dass eine solche Nachbildung eines fluidischen Dämpfers nicht in allen Fällen ein optimales Ergebnis liefert. Daher besitzt die Regeleinrichtung 80 in den bevorzugten Ausführungsbeispielen einen weiteren Zweig mit einem weiteren D-Glied 100, einem FIR-Filter 102 und einem weiteren P-Glied 104, die in Reihe zueinander angeordnet sind. Eingangsseitig erhält das weitere D-Glied 100 die Auslenkungsgeschwindigkeit 96 vom Ausgang des D-Gliedes 92. Das weitere D-Glied 100 liefert die Auslenkungsbeschleunigung 105 des Taststiftes 22 und damit ein Signal, das eine Differenzbeschleunigung des Taststiftes 22 relativ zu der feststehenden Tastkopfbasis 56 angibt. Da die Schwingungen des Taststiftes 22 typischerweise sinusförmig sind, ist die Auslenkungsbeschleunigung ebenfalls sinusförmig, jedoch um 180° phasenverschoben. Im Idealfall führt die Subtraktion der Auslenkungsbeschleunigung 105 zu einer optimalen Dämpfung der Schwingungen.

Problematisch ist allerdings, dass vorhandene Störsignale (Rauschen, externe Störungen u.a.) durch die zweifache Differenzierung überproportional verstärkt werden. Zur Unterdrückung dieser Störeinflüsse dient das FIR-Filter 102, das im vorliegenden Ausführungsbeispiel eine weitgehend rechteckige Gewichtung aufweist. Mit anderen Worten bildet das FIR-Filter 102 einen gleitenden Mittelwert aus dem aktuellen Beschleunigungswert und vergangenen Beschleunigungswerten. Durch die Mittelwertbildung werden die Störeinflüsse reduziert. Das gefilterte Beschleunigungssignal 107 wird mit Hilfe des weiteren P-Gliedes 104 verstärkt und am Summationspunkt 106 von der verstärkten Regelabweichung 86 subtrahiert. Damit erhält man eine Stellgröße 108, mit deren Hilfe die definierte Vorauslenkung des Taststiftes 22 eingestellt wird. In bevorzugten Ausführungsbeispielen ist die Stellgröße 108 ein Steuerstrom, mit dem der Aktor 62 angesteuert wird.

Mit der Bezugsziffer 110 ist ein Taktsignal bezeichnet, mit dem angedeutet ist, dass der Regelkreis 80 taktweise durchlaufen wird. Mit anderen Worten wird mit jedem Takt des Taktsignals 110 ein Sollwert-Istwert-Vergleich durchgeführt, um die Regelabweichung 86 zu bestimmen, und es wird mit Hilfe der Glieder 88 bis 106 die Stellgröße zum Einstellen der Antastkraft bestimmt.

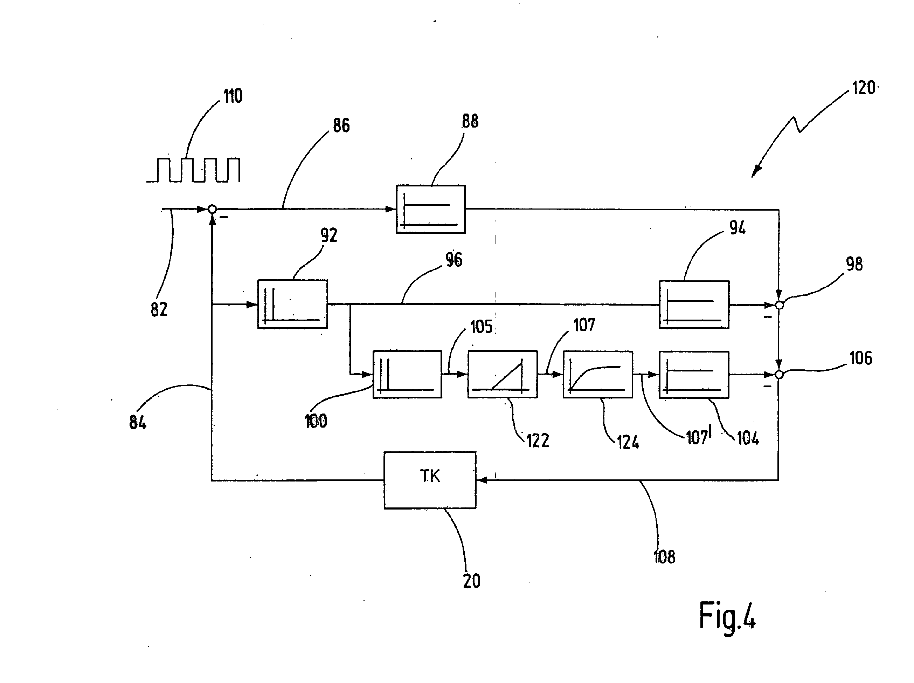

Fig. 4 zeigt ein besonders bevorzugtes Ausführungsbeispiel für eine Regeleinrichtung, die in dem Koordinatenmessgerät 10 aus Fig. 1 zur Anwendung kommt. Der Grundaufbau der Regeleinrichtung 120 entspricht der Regeleinrichtung 80 aus Fig. 3. Gleiche Bezugszeichen bezeichnen daher jeweils gleiche Elemente.

Im Unterschied zu der Regeleinrichtung 80 aus Fig. 3 besitzt die Regeleinrichtung 120 allerdings ein FIR-Filter 122, das eine weitgehend dreieckige Gewichtung aufweist. Bei dem FIR-Filter 122 werden vergangene Beschleunigungswerte umso geringer gewichtet, je weiter sie in der Vergangenheit zurückliegen. Mit anderen Worten gehen weiter in der Vergangenheit liegende Beschleunigungswerte weniger stark in die gewichtete Filtersumme ein. Ein solches FIR-Filter besitzt gegenüber den FIR-Filter 102 mit weitgehend rechteckiger Gewichtung den Vorteil, dass die Phasenverschiebung des gefilterten Beschleunigungssignals 107 gegenüber dem ungefilterten Beschleunigungssignal 105 noch geringer ausfällt.

Außerdem besitzt die Regeleinrichtung 120 ein zusätzliches IIR-Filter 124, das zwischen dem FIR-Filter 122 und dem weiteren P-Glied 104 angeordnet ist. Das IIR-Filter 124 ist als Hochpass ausgebildet, um hochfrequente Störungen noch weiter zu unterdrücken. Derartige Störungen können insbesondere die Folge von Bodenschwingungen sein, die sich auf das Koordinatenmessgerät 10 übertragen. Solche Bodenschwingungen können bspw. schon entstehen (wenn auch nur in geringem Maß), wenn jemand während der scannenden Messung an dem Koordinatenmessgerät 10 vorbeigeht.

Fig. 5 zeigt ein weiteres bevorzugtes Ausführungsbeispiel für eine Regeleinrichtung 130, die in dem Koordinatenmessgerät 10 zur Anwendung kommen kann. Bei der Regeleinrichtung 130 wird die Beschleunigung des Taststiftes 22 relativ zu dem Tastkopf 20 nicht durch zweifache Differenzierung, sondern mit Hilfe eines Zustandsbeobachters 132 bestimmt. Der Zustandsbeobachter 132 ist ein Modell bzw. eine mathematische Simulation des Tastkopfes 20. Dem Zustandsbeobachter 132 ist sowohl die Stellgröße 108 zum Einstellen der definierten Vorauslenkung als auch die Ist-Auslenkung 84 zugeführt. Der Zustandsbeobachter 132 kann mit Hilfe dieser Eingangs- und Ausgangsgrößen das Systemverhalten des Tastkopfes 20 modellieren.
Aus dem modellierten Systemverhalten lässt sich die Differenzbeschleunigung 134 in bekannter Weise bestimmen. Die Differenzbeschleunigung 134 wird wieder über ein P-Glied 104 verstärkt und von der verstärkten Regelabweichung 86 subtrahiert.

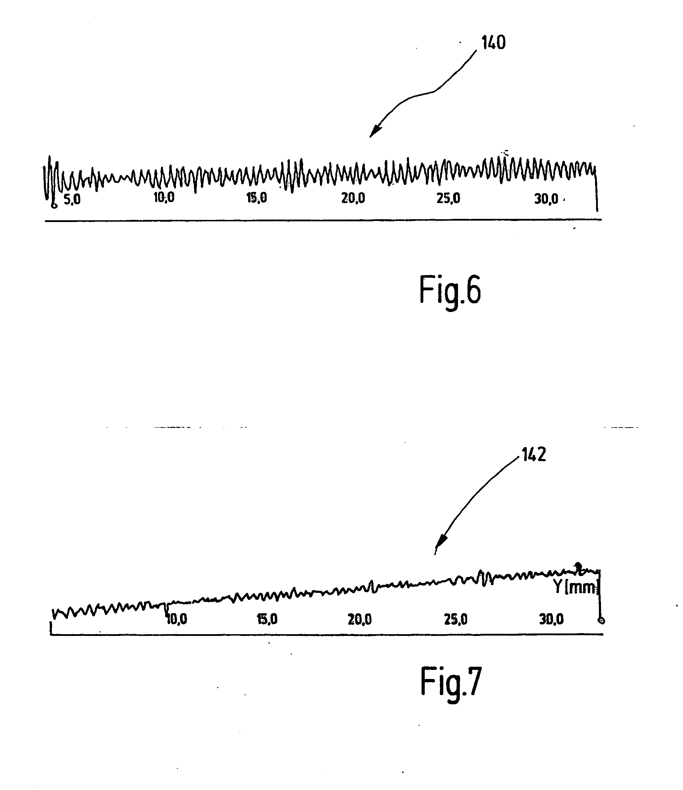

Fig. 6 zeigt einen Messverlauf 140, der ohne das neue Verfahren aufgenommen wurde. Der Messverlauf 140 zeigt die Auslenkungen des Taststiftes 22 relativ zum Tastkopf 20 beim Scannen einer horizontalen Kontur 25 an einem Messobjekt 26. Die Schwingungen des Taststiftes 22 sind deutlich zu erkennen.

Fig. 7 zeigt einen vergleichbaren Messverlauf 142, der allerdings mit Hilfe des neuen Verfahrens aufgenommen wurde. Wie man erkennen kann, sind die Schwingungen des Taststiftes 22 deutlich reduziert. (Der Vollständigkeit halber sei angemerkt, dass der Messverlauf 142 hier einen linear ansteigenden Anteil zu enthalten scheint. Dieser Anteil ist tatsächlich jedoch nicht vorhanden. Der lineare Anstieg ist auf die Darstellungsmöglichkeiten in dem verwendeten Messaufbau zurückzuführen.)

## Patentansprüche

1. Verfahren zum Bestimmen von Raumkoordinaten an einer Vielzahl von Messpunkten (24) entlang einer Kontur (25) eines Messobjekts (26), mit den
Schritten:
- Bereitstellen eines Tastkopfes (20) mit einem Tastelement (22), das an dem Tastkopf (20) beweglich gelagert ist, wobei der Tastkopf (20) relativ zu dem Messobjekt (26) in einem Messvolumen verfahren wird,
- Antasten eines ersten Messpunktes (26) an der Kontur (25) mit dem Tastelement (22) und Aufnehmen von ersten Positionsmesswerten (28-32) und ersten Auslenkungen (70), wobei die ersten Positionsmesswerte für die Position des Tastkopfes (20) in dem Messvolumen repräsentativ sind, und wobei die ersten Auslenkungen für die Position des Tastelements (22) relativ zum Tastkopf (20) repräsentativ sind,
Verfahren des Tastkopfes (20) entlang der Kontur (25) und Aufnehmen von weiteren Positionsmesswerten und weiteren Auslenkungen, und
- Bestimmen der Raumkoordinaten in Abhängigkeit von den Positionsmesswerten und den Auslenkungen,
- wobei das Tastelement (22) beim Verfahren des Tastkopfes (20) in Kontakt mit der Kontur (25) gehalten wird, indem mit Hilfe eines Aktors (62) zum Einstellen einer Vorauslenkung (X) des Tastelements (22) eine definierte Antastkraft erzeugt wird,
**dadurch gekennzeichnet, dass** die definierte Antastkraft in Abhängigkeit von einer Differenzbeschleunigung (105; 134) des Tastelements (22) relativ zu dem Tastkopf (20) und ferner in Abhängigkeit von einer Geschwindigkeit (96) des Tastelements (22) relativ zu dem Tastkopf (20) bestimmt wird.

2. Verfahren nach Anspruch 1, wobei die an der Bestimmung der Differenzbeschleunigung des Tastelements (22) zumindest ein Beschleunigungssensor (72, 74) beteiligt ist.

3. Verfahren nach Anspruch 1 oder 2, wobei die Differenzbeschleunigung (134) des Tastelements (22) mit zumindest einem Zustandsbeobachter (132) geschätzt wird.

4. Verfahren nach einem der Ansprüche 1 bis 3, wobei die Differenzbeschleunigung (105) des Tastelements (22) durch eine zweifache Differenzierung aus den Auslenkungen des Tastelements (22) relativ zum Tastkopf (20) bestimmt wird.

5. Verfahren nach einem der Ansprüche 1 bis 4, wobei die Antastkraft taktweise in Abhängigkeit von der Differenzbeschleunigung des Tastelements (22) und in Abhängigkeit der Geschwindigkeit des Tastelements relativ zu dem Tastkopf bestimmt wird:

6. Verfahren nach einem der Ansprüche 1 bis 5, wobei die Differenzbeschleunigung (105) des Tastelements (22) gefiltert wird, um eine gefilterte Differenzbeschleunigung (107, 107') zu erhalten, und wobei die Antastkraft in Abhängigkeit von der gefilterten Beschleunigung des Tastelements (22) und in Abhängigkeit der Geschwindigkeit des Tastelements relativ zu dem Tastkopf bestimmt wird.

7. Verfahren nach Anspruch 6, wobei die Differenzbeschleunigung (105) des Tastelements (22) mit Hilfe eines nicht-rekursiven Filters (102; 122) gefiltert wird, um die gefilterte Differenzbeschleunigung (107) zu erhalten.

8. Verfahren nach Anspruch 7, wobei das nicht-rekursive Filter (102) eine weitgehend rechteckige Gewichtung aufweist.

9. Verfahren nach Anspruch 7, wobei das nicht-rekursive Filter (122) eine weitgehend dreieckige Gewichtung aufweist.

10. Verfahren nach einem der Ansprüche 6 bis 9, wobei die Differenzbeschleunigung (105) des Tastelements (22) außerdem mit einem rekursiven Hochpassfilter (124) gefiltert wird, um die gefilterte Differenzbeschleunigung (107') zu erhalten.

11. Vorrichtung zum Bestimmen von Raumkoordinaten an einer Vielzahl von Messpunkten (24) entlang einer Kontur (25) eines Messobjekts (26), mit
- einem Tastkopf (20) mit einem Tastelement (22), das an dem Tastkopf (20) beweglich gelagert ist, wobei der Tastkopf (20) relativ zu dem Messobjekt (26) in einem Messvolumen verfahrbar ist, und wobei der Tastkopf zumindest einen Aktor (62) zum Einstellen einer Vorauslenkung (X) des Tastelements (22) relativ zu einer Tastkopfbäsis (56) besitzt,
- ersten Positionsmesseinrichtungen (28, 30, 32) zum Bestimmen von Positionsmesswerten, die für die Position des Tastkopfes (20) in dem Messvolumen repräsentativ sind,
- zweiten Positionsmesseinrichtungen (68) zum Bestimmen von Auslenkungen, die für die Position des Tastelements (22) relativ zum Tastkopf (20) repräsentativ sind,
- einer Auswerte- und Steuereinheit (34) zum Bestimmen der Raumkoordinaten in Abhängigkeit von den Positionsmesswerten und den Auslenkungen, und
- einer Regeleinrichtung (80; 120; 130), die dazu ausgebildet ist, das Tastelement (22) beim Verfahren des Tastkopfes (20) in Kontakt mit der Kontur (25) zu halten, indem mit Hilfe des Aktors (62) eine definierte Antastkraft erzeugt wird,
**dadurch gekennzeichnet, dass** die Regeleinrichtung (80; 120; 130) dazu ausgebildet ist, die definierte Antastkraft in Abhängigkeit von einer Differenzbeschleunigung (105; 134) des Tastelements (22) relativ zu dem Tastkopf (20) und ferner in Abhängigkeit von einer Geschwindigkeit (96) des Tastelements (22) relativ zu dem Tastkopf (20) zu bestimmen.

12. Computerprogramm mit Programmcode, der dazu ausgebildet ist, ein Verfahren nach einem der Ansprüche 1 bis 10 auszuführen, wenn der Programmcode in der Auswerte- und Steuereinheit einer Vorrichtung nach Anspruch 11 ausgeführt wird, wobei das Programm sämtliche Verfahrensschritte eines der Ansprüche 1-10 beinhaltet.

## Claims

1. A method for determining spatial coordinates at a multiplicity of measurement points (24) along a contour (25) of a measurement object (26), the method comprising the steps of:
- providing a probe head (20) with a probe element (22) that is movably supported on the probe head (20), the probe head (20) being moved relative to the measurement object (26) in a measuring volume,
- sensing a first measurement point (26) on the contour (25) with the aid of the probe element (22), and recording first measured position values (28-32) and first deflections (70), the first measured position values being representative of the position of the probe head (20) in the measuring volume, and the first deflections being representative of the position of the probe element (22) relative to the probe head (20),
- moving the probe head (20) along the contour (25), and recording further measured position values and further deflections, and
- determining the spatial coordinates as a function of the measured position values and the deflections,
- wherein the probe element (22) is held in contact with the contour (25) during movement of the probe head (20) by producing a defined sensing force by means of an actuator (62) for setting a preliminary deflection (X) of the probe element (22),
**characterized in that** the defined sensing force is determined as a function of a differential acceleration (105; 134) of the probe element (22) relative to the probe head (20) and, furthermore, as a function of a speed (96) of the probe element (22) relative to the probe head (20).

2. The method as claimed in claim 1, wherein at least one acceleration sensor (72, 74) is used for determining the differential acceleration of the probe element (22).

3. The method as claimed in claim 1 or 2, wherein the differential acceleration (134) of the probe element (22) is estimated with the aid of at least one state observer (132).

4. The method as claimed in one of claims 1 to 3, wherein the differential acceleration (105) of the probe element (22) is determined by a twofold differentiation from the deflections of the probe element (22) relative to the probe head (20).

5. The method as claimed in one of claims 1 to 4, wherein the sensing force is determined periodically as a function of the differential acceleration of the probe element (22), and as a function of the speed of the probe element relative to the probe head.

6. The method as claimed in one of claims 1 to 5, wherein the differential acceleration (105) of the probe element (22) is filtered in order to obtain a filtered differential acceleration (107, 107'), and wherein the sensing force is determined as a function of the filtered differential acceleration of the probe element (22), and as a function of the speed of the probe element relative to the probe head.

7. The method as claimed in claim 6, wherein the differential acceleration (105) of the probe element (22) is filtered with the aid of a non-recursive filter (102; 122) in order to obtain the filtered differential acceleration (107).

8. The method as claimed in claim 7, wherein the non-recursive filter (102) has a largely rectangular weighting.

9. The method as claimed in claim 7, wherein the non-recursive filter (122) has a largely triangular weighting.

10. The method as claimed in one of claims 6 to 9, wherein the differential acceleration (105) of the probe element (22) is, furthermore, filtered with the aid of a recursive highpass filter (124) in order to obtain the filtered differential acceleration (107').

11. An apparatus for determining spatial coordinates at a multiplicity of measurement points (24) along a contour (25) of a measurement object (26), the apparatus comprising
- a probe head (20) with a probe element (22) that is movably supported on the probe head (20), the probe head (20) being movable relative to the measurement object (26) in a measuring volume, and the probe head having at least one actuator (62) for setting a preliminary deflection (X) of the probe element (22) relative to a probe head base (56),
- first position measuring devices (28, 30, 32) for determining measured position values that are representative of the position of the probe head (20) in the measuring volume,
- second position measuring devices (68) for determining deflections that are representative of the position of the probe element (22) relative to the probe head (20),
- an evaluation and control unit (34) for determining the spatial coordinates as a function of the measured position values and the deflections, and
- a control device (80; 120; 130) configured to hold the probe element (22) in contact with the contour (25) during movement of the probe head (20) by producing a defined sensing force by means of the actuator (62),
**characterized in that** the control device (80; 120; 130) is designed to determine the defined sensing force as a function of a differential acceleration (105; 134) of the probe element (22) relative to the probe head (20) and, furthermore, as a function of a speed (96) of the probe element (22) relative to the probe head (20).

12. A computer program comprising program code that is designed to execute a method as claimed in one of claims 1 to 10 when the program code is executed in the evaluation and control unit of an apparatus as claimed in claim 11, the program containing all the method steps of one of claims 1 to 10.

## Revendications

1. Procédé servant à déterminer des coordonnées spatiales au niveau d'une pluralité de points de mesure (24) le long d'un contour (25) d'un objet à mesurer (26), comportant les étapes suivantes consistant à :
- mettre à disposition un palpeur (20) avec un élément tactile (22), lequel est logé de manière mobile au niveau du palpeur (20), le palpeur (20) se déplaçant dans un volume de mesure par rapport à l'objet à mesurer (26),
- palper un premier point de mesure (26) au niveau du contour (25) avec l'élément tactile (22) et relever les premières valeurs de mesure de position (28-32) et les premières flexions (70), les premières valeurs de mesure de position étant représentatives dans le volume de mesure de la position du palpeur (20) et les premières flexions étant représentatives de la position de l'élément tactile (22) par rapport au palpeur (20),
- déplacer le palpeur (20) le long du contour (25) et relever diverses valeurs de mesure de position et diverses flexions, et
- déterminer les coordonnées spatiales en fonction des valeurs de mesure de position et des flexions,
- sachant que l'élément tactile (22) est maintenu lors du déplacement du palpeur (20) en contact avec le contour (25), tandis qu'à l'aide d'un actionneur (62) servant à ajuster une préflexion (X) de l'élément tactile (22), une force de déclenchement définie est générée,
**caractérisé en ce que** la force de déclenchement définie est déterminée en fonction de l'accélération différentielle (105 ; 134) de l'élément tactile (22) par rapport au palpeur (20) et en outre en fonction d'une vitesse (96) de l'élément tactile (22) par rapport au palpeur (20).

2. Procédé selon la revendication 1, sachant qu'au moins un capteur d'accélération (72, 74) participe à la détermination de l'accélération différentielle de l'élément tactile (22).

3. Procédé selon la revendication 1 ou 2, sachant que l'accélération différentielle (134) de l'élément tactile (22) est évaluée avec au moins un dispositif d'observation de l'état (132).

4. Procédé selon l'une quelconque des revendications 1 à 3, sachant que l'accélération différentielle (105) de l'élément tactile (22) est déterminée grâce à une double différentiation des flexions de l'élément tactile (22) par rapport au palpeur (20).

5. Procédé selon l'une quelconque des revendications 1 à 4, sachant que la force de déclenchement est déterminée par cycle en fonction de l'accélération différentielle de l'élément tactile (22) et en fonction de la vitesse de l'élément tactile par rapport au palpeur.

6. Procédé selon l'une quelconque des revendications 1 à 5, sachant que l'accélération différentielle (105) de l'élément tactile (22) est filtrée afin d'obtenir une accélération différentielle (107, 107') filtrée, et sachant que la force de déclenchement est déterminée en fonction de l'accélération filtrée de l'élément tactile (22) et en fonction de la vitesse de l'élément tactile par rapport au palpeur.

7. Procédé selon la revendication 6, sachant que l'accélération différentielle (105) de l'élément tactile (22) est filtrée à l'aide d'un filtre (102 ; 122) non récursif afin d'obtenir l'accélération différentielle (107) filtrée.

8. Procédé selon la revendication 7, sachant que le filtre non récursif (102) présente une pondération largement rectangulaire.

9. Procédé selon la revendication 7, sachant que le filtre non récursif (122) présente une pondération largement triangulaire.

10. Procédé selon l'une quelconque des revendications 6 à 9, sachant que l'accélération différentielle (105) de l'élément tactile (22) est en outre filtrée avec un filtre passe-haut (124) récursif afin d'obtenir l'accélération différentielle (107') filtrée.

11. Dispositif servant à déterminer des coordonnées spatiales au niveau d'une pluralité de points de mesure (24) le long d'un contour (25) d'un objet à mesurer (26), comportant
- un palpeur (20) avec un élément tactile (22), lequel élément tactile est logé de manière mobile au niveau du palpeur (20), sachant que le palpeur (20) peut être déplacé dans un volume de mesure par rapport à l'objet à mesurer (26) et sachant que le palpeur comprend au moins un actionneur (62) servant à ajuster une préflexion (X) de l'élément tactile (22) par rapport à une base du palpeur (56),
- des premiers dispositifs de mesure de position (28, 30, 32) servant à déterminer des valeurs de mesure de position, qui sont représentatives de la position du palpeur (20) dans le volume de mesure,
- des seconds dispositifs de mesure de position (68) servant à déterminer des flexions, qui sont représentatives de la position de l'élément tactile (22) par rapport au palpeur (20),
- une unité d'évaluation et de commande (34) servant à déterminer les coordonnées spatiales en fonction des valeurs de mesure de position et des flexions, et
- un dispositif de réglage (80 ; 120 ; 130) qui est réalisé dans le but de maintenir l'élément tactile (22) en contact avec le contour (25) lors du déplacement du palpeur (20), tandis qu'à l'aide de l'actionneur (62), une force de déclenchement définie est générée,
**caractérisé en ce que** le dispositif de réglage (80 ; 120 ; 130) est réalisé dans le but de déterminer la force de déclenchement définie en fonction de l'accélération différentielle (105 ; 134) de l'élément tactile (22) par rapport au palpeur (20) et en outre en fonction d'une vitesse (96) de l'élément tactile (22) par rapport au palpeur (20).

12. Programme informatique comportant un code de programmation, qui est réalisé dans le but d'exécuter un procédé selon l'une quelconque des revendications 1 à 10, quand le code de programmation est exécuté dans l'unité d'évaluation et de commande d'un dispositif selon la revendication 11, sachant que le programme comprend toutes les étapes de procédé selon l'une quelconque des revendications 1 à 10.
